Europäisches Patentamt

(19) European Patent Office

Office européen des brevets

(11) Numéro de publication : **0 321 467 B1**

## (12) FASCICULE DE BREVET EUROPEEN

(45) Date de publication du fascicule du brevet :
24.07.91 Bulletin 91/30

(51) Int. Cl.⁵ : **E06C 1/32, F16C 11/10**

(21) Numéro de dépôt : 87904900.5

(22) Date de dépôt : 04.08.87

(86) Numéro de dépôt international :
PCT/FR87/00304

(87) Numéro de publication internationale :
WO 88/01676 10.03.88 Gazette 88/06

(54) ELEMENT D'ARTICULATION POUR SUPPORT PLIANT.

(30) Priorité : 05.09.86 FR 8612584

(43) Date de publication de la demande :
28.06.89 Bulletin 89/26

(45) Mention de la délivrance du brevet :
24.07.91 Bulletin 91/30

(84) Etats contractants désignés :
AT BE CH DE FR GB IT LI LU NL SE

(56) Documents cités :
DE-A- 2 650 006
FR-A- 2 082 571
FR-A- 2 534 307
US-A- 1 328 874
US-A- 4 363 561

(73) Titulaire : REY, Henri
8, rue des Augustins
F-68000 Colmar (FR)

(72) Inventeur : REY, Henri
8, rue des Augustins
F-68000 Colmar (FR)

(74) Mandataire : Nithardt, Roland
CABINET NITHARDT & BURKARD 12 rue du 17
Novembre Boite Postale 1445
F-68071 Mulhouse Cédex (FR)

Jouve, 18, rue Saint-Denis, 75001 PARIS

## Description

La présente invention concerne un élément d'articulation pour support pliant pourvu de montants longitudinaux et de traverses, en particulier pour échafaudage ou échelle pliante, comprenant deux coquilles métalliques identiques comportant chacune un embout profilé, destiné à être fixé à une extrémité d'un montant du support, et une partie circulaire pourvue d'un fond disposé transversalement par rapport à l'axe de l'articulation et d'un rebord périphérique ayant des organes d'ancrage mutuel avec l'autre coquille pour rendre les deux coquilles solidaires en rotation autour dudit axe, l'élément comprenant en outre des organes de verrouillage agencés pour serrer les deux coquilles axialement l'une contre l'autre de manière à maintenir en engagement mutuel leurs organes d'ancrage.

On connaît déjà un élément d'articulation de ce genre pour une échelle par le document FR-A-2534307. Dans cet élément connu, chacune des coquilles comporte un rebord périphérique qui est disposé axialement suivant une forme cylindrique. Pour pouvoir s'accrocher au rebord identique de la coquille opposée, le rebord comporte sur son bord libre une rangée circulaire de dents rectangulaires ou trapézoïdales séparées par des creux ayant le même profil que les dents.

Ce type de coquille présente divers inconvénients, particulièrement si l'on veut le réaliser en tôle emboutie, ce qui permet évidemment une fabrication très bon marché. Comme les dents du rebord sont découpées dans le bord de la tôle, leurs surfaces d'appui ont une largeur égale à l'épaisseur de la tôle et sont donc très petites. Il en résulte des pressions superficielles qui peuvent altérer assez vite l'état des surfaces métalliques et particulièrement le revêtement protecteur généralement prévu. D'autre part, comme ledit rebord est interrompu dans la zone de l'embout profilé, l'engrènement des deux rebords des coquilles ne garantit pas le centrage réciproque des coquilles car les dents étroites peuvent facilement se dégager les unes des autres par un petit déplacement transversal ou une petite déformation. Enfin, le profil rectangulaire ou trapézoïdal des dents est désavantageux, parce qu'à l'utilisation le réglage de l'ouverture de l'échelle et son blocage en position obligent l'utilisateur à insérer les dents de l'une des coquilles de l'articulation dans les creux de l'autre, ce qui nécessite une certaine attention étant donné que la tenue de l'échelle dépend de la précision de l'ajustage des organes d'ancrage des deux éléments complémentaires. En outre, l'insertion répétée des angles des dents dans les creux entraîne nécessairement une usure qui provoque à la longue un jeu dans l'articulation.

Le brevet US-A-1.328.874 décrit un élément d'articulation de fenêtre pivotante, comportant deux blocs circulaires co-axiaux serrés l'un contre l'autre et ayant, sur leurs surfaces de contact, une zone en arc de cercle pourvue d'un relief ondulé en direction circonférentielle, les crêtes du relief d'un bloc s'engageant dans les creux du relief de l'autre bloc. Ces blocs sont relativement épais et leur fabrication exige soit un moulage, soit un usinage.

La présente invention se propose de pallier ces différents inconvénients en réalisant une articulation composée de deux coquilles identiques qui sont conçues pour être ajustées en position l'une par rapport à l'autre et bloquées dans la position choisie sans aucune difficulté. Les organes d'ancrage s'emboîtent quasi automatiquement et aucun jeu dû à une usure suite à l'utilisation prolongée de l'articulation n'est à craindre. En outre, la construction de cet élément d'articulation est très simple et son montage est facilité du fait que les deux coquilles sont identiques.

Ces buts sont atteints par l'élément d'articulation selon l'invention, caractérisé en ce qu'au moins ladite partie circulaire est en tôle emboutie, en ce que lesdits rebords s'étendent sensiblement radialement par rapport à l'aie de l'articulation, et en ce que la tôle de ces rebords est plissée suivant un profil ondulé en direction circonférentielle et comprenant des crêtes arrondies et des creux arrondis, les crêtes ayant sensiblement le même profil que les creux.

Selon un mode de réalisation préféré, chaque coquille est constituée par une seule pièce de tôle emboutie.

Le profil ondulé du rebord est au moins approximativement sinusoïdal.

Selon un mode de réalisation avantageux, la partie circulaire de chaque coquille est concave du côté de la coquille opposée et comporte un fond plat, et les organes de verrouillage comportent un boulon monté axialement à travers les deux coquilles et un écrou de serrage, ces organes exerçant une pression axiale sur les fonds des deux coquilles.

Pour permettre la mise en place de l'élément d'articulation aux extrémités des montants longitudinaux des supports pliants, l'embout profilé est avantageusement constitué par un tronçon profilé dont la section transversale correspond à celles desdits montants longitudinaux. Cette section transversale peut être en forme de U ou de forme carrée, rectangulaire ou circulaire.

La présente invention concerne également une échelle pliante, caractérisée en ce qu'elle comporte au moins deux tronçons successifs dont chaque montant est relié au montant correspondant de l'autre tronçon par un élément d'articulation tel que défini ci-dessus. Cette échelle peut comporter plusieurs tronçons articulés les uns par rapport aux autres.

La présente invention sera mieux comprise en référence à la description suivante d'une forme de réalisation et des dessins annexés, dans lesquels :

La figure 1 représente une vue en plan de l'élément d'articulation selon l'invention,

La figure 2 représente une vue partielle en élévation d'une articulation d'échelle pliante ou d'échafaudage réalisée au moyen de l'élément d'articulation selon l'invention,

La figure 3 représente une vue de profil d'un élément d'articulation selon l'invention, et

La figure 4 représente une vue schématique d'une échelle pliante ou d'un échafaudage pliant modulaire comportant plusieurs tronçons assemblés au moyen d'éléments d'articulation selon l'invention.

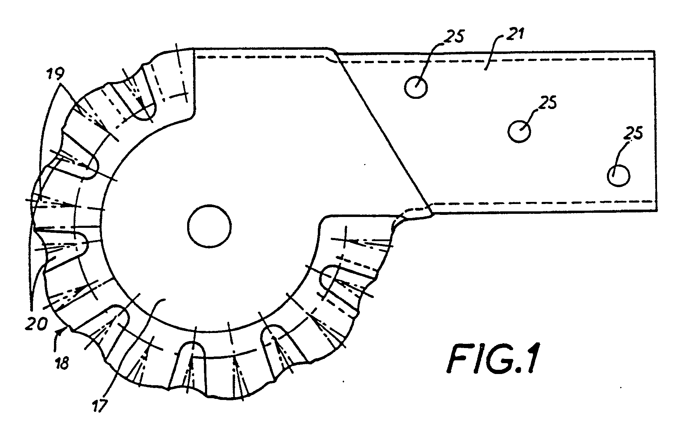

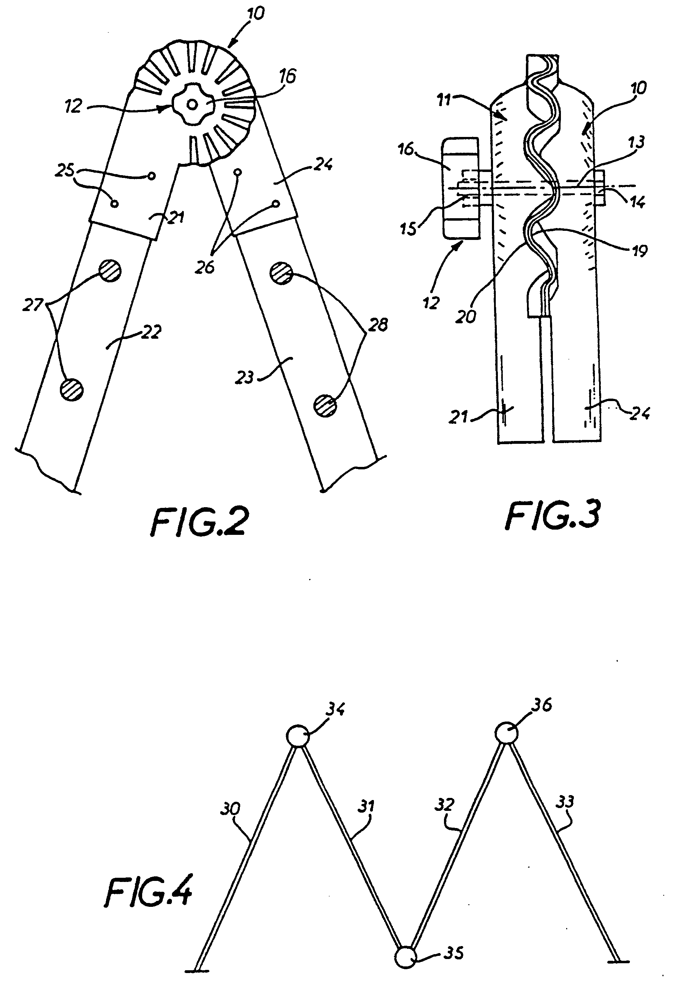

En référence aux figures 1 à 3, l'élément d'articulation utilisé pour assembler des tronçons d'échelle pliante ou d'échafaudage se compose de deux coquilles identiques 10 et 11 juxtaposées et maintenues en appui l'une contre l'autre par les organes de verrouillage 12 constitués de préférence par un boulon 13 ayant un collet carré ou une tête 14 pouvant par exemple être soudée à la coquille 10, et par un écrou 15 moulé dans un bouton 16 en matière synthétique. Chacune des coquilles est constituée d'une pièce circulaire concave comportant un fond plat 17 entouré d'un rebord annulaire 18 formé de plis arrondis dont les crêtes 19 sont séparées par des creux 20 ayant sensiblement le même profil que les créneaux. Ces plis ont un profil assez proche d'une forme sinusoïdale, de telle manière que les crêtes d'une coquille puissent se loger dans les creux de la coquille adjacente, lorsque deux coquilles identiques sont assemblées, comme le montrent les figures 2 et 3, pour former un élément d'articulation.

Le rebord annulaire 18 est interrompu dans une zone de raccordement d'un embout profilé 21 ou 24 agencé pour s'adapter à une extrémité d'un montant longitudinal 22 ou 23 par exemple d'une échelle pliante telle que partiellement représentée par la figure 4. Les embouts 21 ou 24 ont une section transversale dont la forme est adaptée à la section transversale des montants longitudinaux 22 ou 23. Cette section peut être en forme de U, lorsque la section des montants 22 ou 23 est rectangulaire ou carrée. Les embouts 21 et 24 peuvent également avoir la forme d'un tronçon de tube à section rectangulaire, carrée ou circulaire. Les montants longitudinaux 22 et 23 sont fixés respectivement aux embouts 21 et 24 par des vis ou boulons 25 et 26. Des barreaux 27 et 28 sont montés entre deux montants parallèles 22 ou 23 d'une échelle pliante ou d'un élément d'échafaudage.

L'élément d'articulation décrit et représenté présente l'avantage d'être de construction extrêmement simple. En effet, cet élément peut être réalisé par simple emboutissage d'une ébauche en tôle plane. Le fait que les plis du rebord 18 présentent un profil arrondi a pour conséquence que seule la position relative des deux coquilles 10 et 11 représentée par la figure 3 est une position stable, toutes les autres positions relatives étant instables.

En effet, lorsque les crêtes de l'une des coquilles sont amenées en appui contre les crêtes de l'autre coquille ou dans une position intermédiaire quelconque entre les crêtes et les creux, le serrage au moyen du boulon 13 et de l'écrou 15 a automatiquement tendance à faire tourner l'une des coquilles par rapport à l'autre pour les amener dans une position d'équilibre stable où les crêtes de l'une des coquilles sont logées au fond des creux de la coquille adjacente. De la sorte, on obtient un autocentrage qui s'effectue sans aucun effort de cisaillement sur le boulon de liaison. En outre, la forme ondulée des rebords 18 garantit une grande surface d'appui de chaque côté dans le creux opposé, et ceci sur toute la longueur de l'arc de recouvrement des deux rebords. Cette forme évite aussi toute friction par des arêtes vives pendant les manoeuvres, ce qui assure une longue durée de vie des coquilles, notamment si la tôle est zinguée.

Pour ouvrir l'angle formé par les montants 22 et 23 d'une échelle pliante, il suffit de desserrer l'écrou 15 au moyen du bouton 16 jusque dans une position où les deux coquilles 10 et 11 peuvent être suffisamment écartées pour tourner librement l'une par rapport à l'autre. Lorsque l'ouverture angulaire choisie est atteinte, l'utilisateur revisse l'écrou 15 pour bloquer les deux coquilles en position l'une par rapport à l'autre. Le dispositif de verrouillage à boulon et écrou pourrait être remplacé par un système de blocage rapide connu en soi.

Dans une forme de réalisation légèrement différente, on peut prévoir que le profil ondulé du rebord 18 s'étend sur 360°, c'est à dire également dans la partie de tôle située entre la partie concave et l'embout profilé 21, 24 de chaque coquille. Ainsi l'on obtient avantageusement une articulation orientable sur 360°, avec deux coquilles identiques qui sont faites entièrement en tôle emboutie et qui sont suffisamment rigides grâce aux ondulations s'étendant entre la partie concave et l'embout profilé.

La figure 4 représente schématiquement une échelle pliante modulaire comportant quatre éléments d'échelle 30, 31, 32 et 33 respectivement reliés entre eux par trois paires d'éléments d'articulation 34, 35 et 36. Grâce à cet élément d'articulation permettant de rendre facilement solidaires des montants d'un support pliant tel que par exemple un escabeau, une échelle, un échafaudage, etc..., il est possible d'envisager la commercialisation séparée de tronquons de tels supports et d'éléments d'articulation destinés à solidariser ces supports. De ce fait, chaque utilisateur pourra réaliser son propre support pliant en fonction de ses besoins ou de l'utilisation envisagée et notamment rallonger une petite échelle de deux ou quatre éléments pour réaliser une échelle à cinq, six ou plus d'éléments et vice versa.

La présente invention n'est pas limitée aux formes de réalisation décrites mais peut subir différentes modifications et se présenter sous diverses variantes évidentes pour l'homme de l'art.

## Revendications

1. Elément d'articulation pour support pliant pourvu de montants longitudinaux et de traverses, en particulier pour échafaudage ou échelle pliante, comprenant deux coquilles métalliques identiques (10, 11) comportant chacune un embout profilé (21, 24), destiné à être fixé à une extrémité d'un montant du support, et une partie circulaire pourvue d'un fond (17) disposé transversalement par rapport à l'axe de l'articulation et d'un rebord périphérique ayant des organes d'ancrage mutuel avec l'autre coquille pour rendre les deux coquilles solidaires en rotation autour dudit axe, l'élément comprenant en outre des organes de verrouillage (12) agencés pour serrer les deux coquilles (10, 11) axialement l'une contre l'autre de manière à maintenir en engagement mutuel leurs organes d'ancrage, caractérisé en ce qu'au moins ladite partie circulaire est en tôle emboutie, en ce que lesdits rebords (18) s'étendent sensiblement radialement par rapport à l'axe de l'articulation, et en ce que la tôle de ces rebords (18) est plissée suivant un profil ondulé en direction circonférentielle et comprenant des crêtes arrondies (19) et des creux arrondis (20), les crêtes ayant sensiblement le même profil que les creux.

2. Elément selon la revendication 1, caractérisé en ce que chaque coquille (10, 11) est constituée par une seule pièce en tôle emboutie.

3. Elément selon la revendication 1, caractérisé en ce que ledit profil ondulé du rebord (18) est au moins approximativement sinusoïdal.

4. Elément selon la revendication 1, caractérisé en ce que ladite partie circulaire de chaque coquille est concave du côté de la coquille opposée et comporte un fond plat (17).

5. Elément selon la revendication 4, caractérisé en ce que les organes de verrouillage (12) comportent un boulon (13) monté axialement à travers les deux coquilles (10, 11) et un écrou de serrage (15), ces organes exerçant une pression axiale sur les fonds (17) des deux coquilles.

6. Elément selon la revendication 1, caractérisé en ce que l'embout profilé (21, 24) est constitué par un tronçon profilé à section transversale en forme de U.

7. Elément selon la revendication 1, caractérisé en ce que l'embout profilé (21, 24) est constitué par un tronçon tubulaire à section transversale de forme carrée, rectangulaire ou circulaire.

8. Echelle pliante, caractérisée en ce qu'elle comporte au moins deux tronquons successifs (30, 31, 32, 33) dont chaque montant (22, 23) est relié au montant correspondant de l'autre tronçon par un élément d'articulation (34, 35, 36) selon l'une des revendications précédentes.

9. Echelle pliante selon la revendication 8, caractérisée en ce qu'elle comporte plusieurs tronçons (30, 31, 32, 33) articulés les uns par rapport aux autres.

## Patentansprüche

1. Gelenk für zusammenklappbare Stütze, die mit Holmen in Längsrichtung und Streben in Querrichtung versehen ist, insbesondere für ein Gerüst oder für eine zusammenklappbare Leiter, bestehend aus zwei identischen metallischen Schalen (10, 11), die je ein profiliertes Endstück (21, 24) aufweist, das dafür bestimmt ist, an einem Ende eines Holms der Stütze befestigt zu werden, und aus einem kreisförmigen Teil, der mit einem Boden (17), der gegenüber der Gelenkachse quer angeordnet ist, und mit einem Rand am Umfang (18) versehen ist, der Teile für eine gegenseitige Verblockung mit der anderen Schale aufweist, damit die beiden Schalen um die besagte Achse bei Drehbewegung fest verbunden sind, wobei das Gelenk außerdem Teile für eine Verriegelung (12) enthält, die eingerichtet sind, um die beiden Schalen (10, 11) in axialer Richtung gegeneinander für ein gegenseitiges Einrasten der Teile für die Verblockung, **dadurch gekennzeichnet**, daß mindestens der besagte kreisförmige Teil aus Blech gezogen ist, daß die besagten Ränder (18) gegenüber der Achse des Gelenks im wesentlichen sich radial erstrecken und daß das Blech dieser Ränder (18) nach einem gewellten Profil in Richtung des Umfangs mit abgerundeten Spitzen (19) und abgerundeten Mulden (20) gefaltet ist, wobei die Stützen im wesentlichen das gleiche Profil wie die Mulden aufweisen.

2. Gelenk gemäß Anspruch 1, **dadurch gekennzeichnet**, daß jede Schale (10, 11) aus einem einzigen Teil aus gezogenem Blech besteht.

3. Gelenk gemäß Anspruch 1, **dadurch gekennzeichnet**, daß das besagte gefaltete Profil des Randes (18) mindestens annähernd sinusförmig ist.

4. Gelenk gemäß Anspruch 1, **dadurch gekennzeichnet**, daß der besagte kreisförmige Teil jeder Schale auf der Seite der gegenüberliegenden Schale nach innen gewölbt ist und einen flachen Boden (17) enthält.

5. Gelenk gemäß Anspruch 4, **dadurch gekennzeichnet**, daß die Teile für eine Verriegelung (12) eine Schaftschraube (13), die axial durch die beiden Schalen (10, 11) hindurch angeordnet ist, und eine Mutter für das Festanziehen (15) enthalten, wobei diese Teile auf den Böden (17) der beiden Schalen einen axialen Druck ausüben.

6) Gelenk gemäß Anspruch 1, **dadurch gekennzeichnet**, daß das profilierte Endstück (21, 24) aus einem profilierten Teil mit einem U-förmigen Querschnitt besteht.

7. Gelenk gemäß Anspruch 1, **dadurch gekennzeichnet**, daß das profilierte Endstück (21, 24) aus einem rohrförmigen Teil mit einem quadratischen, rechteckigen oder kreisförmigen Querschnitt besteht.

8. Zusammenklappbare Leiter, **dadurch gekennzeichnet**, daß sie mindestens zwei einander folgende Teilstücke (30, 31, 32, 33) enthält, bei der jeder Holm (22, 23) mit dem entsprechenden Holm des anderen Teilstücks durch ein Gelenk (34, 35, 36) gemäß einem der vorstehenden Ansprüche verbunden ist.

9. Zusammenklappbare Leiter gemäß Anspruch 8, **dadurch gekennzeichnet**, daß sie mehrere Teilstücke (30, 31, 32, 33) enthält, die einander gegenüber angelenkt sind.

## Claims

1. Hinge element for a folding support provided with longitudinal uprights and cross pieces, in particular for scaffolding or a folding ladder, comprising two identical metallic shells each comprising a shaped tip, adapted to be fixed at one end of an upright of the support, and a circular part provided with a bottom positioned transversely with respect to the axis of the hinge and a peripheral flange having mutual anchoring members with the other shell to render the two shells solidary in rotation around said axis, the element comprising in addition locking members arranged to press the two shells axially against one another in a manner so as to maintain in mutual engagement their anchoring members, characterized in that said circular part is made of dished metal plate, in that said flanges (18) extend substantially radially with respect to the hinge axis, in that the metal plate of these flanges has a corrugated profile in the circumferential direction and in that this corrugated profile comprises rounded crests (19) and rounded hollows (20), the crests having substantially the same profile as the hollows.

2. Element according to claim 1, characterized in that each shell (10, 11) is constituted by a single part of dished metal plate.

3. Element according to claim 1, characterized in that said corrugated profile of the flange (20) is at least approximately sinusoidal.

4. Element according to claim 1, characterized in that said circular part of each shell is concave on the side of the opposite shell and comprises a flat bottom (17).

5. Element according to claim 4, characterized in that the locking members (12) comprise a bolt (13) mounted axially through the two shells (10, 11) and a tightening nut (15), these members exerting an axial pressure on the bottoms (17) of the two shells.

6. Element according to claim 1, characterized in that the shaped tip (21, 24) is constituted by a shaped section having a U-shaped transverse section.

7. Element according to claim 1, characterized in that the shaped tip (21, 24) is constituted by a tubular section having a transverse section with a square, rectangular or circular shape.

8. Folding ladder, characterized in that it comprises at least two successive sections of which each upright is connected to the corresponding upright of the other section by a hinge element according to one of the preceding claims.

9. Folding ladder according to claim 8, characterized in that it comprises several sections hinged with respect to one another.

FIG.1

FIG.2

FIG.3

FIG.4